# EUROPEAN PATENT SPECIFICATION

(11) **EP 1 433 830 B1**
(45) Date of publication and mention of the grant of the patent: **14.03.2007**
(21) Application number: 02775236.9
(22) Date of filing: 26.09.2002
(51) Int. Cl.: C09K 3/10, B60C 19/12, B29D 30/06, B29L 30/00

(54) **PNEUMATIC TIRE HAVING A TACKY SEALANT LAYER AND PROCESS FOR PRODUCING THE SAME**
LUFTREIFEN MIT KLEBRIGER VERSIEGELUNGSSCHICHT UND VERFAHREN ZU SEINER HERSTELLUNG
PNEU AYANT UNE COUCHE ETANCHE COLLANTE ET SON PROCEDE DE PRODUCTION

(30) Priority: 26.09.2001 JP 2001294172; 22.08.2002 JP 2002242366
(43) Date of publication of application: 30.06.2004
(73) Proprietor: THE YOKOHAMA RUBBER CO., LTD., Tokyo 105-8685 (JP); HONDA GIKEN KOGYO KABUSHIKI KAISHA, Minato-ku, Tokyo 107-8556 (JP)
(72) Inventor: FUKUTOMI,Takashi c/o The Yokohama Rubber Co., Ltd., Hiratsuka-shi, Kanagawa 254-8601 (JP); SEKIGUCHI,Takumi c/o The Yokohama Rubber Co., Ltd., Hiratsuka-shi, Kanagawa 254-8601 (JP); NAKAKITA, Issei, c/o The Yokohama Rubber Co., Ltd., Minato -ku Tokyo 105-8685 (JP); NAITO, Mitsuru, c/o The Yokohama Rubber Co., Ltd., Hiratsuka-shi, Kanagawa 254-8601 (JP); KOBAYASHI,Yuichi c/o The Yokohama Rubber Co., Ltd., Hiratsuka-shi, Kanagawa254-8601 (JP); IKEGAMI, Tetsuo, c/o The Yokohama Rubber Co., Ltd., Shinshiro-shi, Aichi 441-1343 (JP); MAKINO, Satoshi, c/o K.K. Honda Gijutsu Kenkyusho, Wako-shi, Saitama 351-0193 (JP); TOYOSHIMA,Takayuki c/o K.K.Honda Gijutsu Kenkyusho, Wako-shi, Saitama 351-0193 (JP); MIZONE, Tetsuya, c/o K.K. Honda Gijutsu Kenkyusho, Wako-shi, Saitama 351-0193 (JP); MIYAWAKI, Naoya, c/o K.K. Honda Gijutsu Kenkyusho, Wako-shi, Saitama 351-0193 (JP)
(74) Representative: HOFFMANN EITLE
(86) International application number: PCT/JP2002/009932
(87) International publication number: WO 2003/027204

(56) References cited:
- EP-A1- 0 007 982
- JP-A- 52 053 950
- JP-A- 53 087 402
- JP-A- 53 124 803
- JP-A- 53 128 808
- US-A- 4 539 344
- FRITZ RÖTHEMEYER, FRANZ SOMMER: "Kautschuktechnologie" 2001, CARL-HANSER VERLAG , MÜNCHEN WIEN * page 724 *

## Description

### TECHNICAL FIELD

The present invention relates to a pneumatic tire having in thetire main body a spongy tacky sealant layer obtained by heating the rubber composition of the sealant layer, and a process for producing the same.

### BACKGROUND ART

Conventionally proposed as measures for a puncture of a tire when the tire steps on a nail or the like while driving are: (1) a run-flat tire in which a rigid portion is inserted into the tire; (2) a process for sealing a puncture by injecting a liquid-like mending agent into a tire from an air valve upon puncture; (3) a process for superposing a tacky sealant on the inner surface of a tire in advance upon tire production; and the like.

However, the run-flat tire of (1) has problems that the weight thereof is increased by a rigid material and this causes aggravation of riding comfort. A problem of the process for injecting a mending liquid of (2) is not as serious as the run-flat tire of (1), in terms of weight increase. However, there is a problem that a driver must go outside the car to inject the liquid upon puncture.

The process of (3) has advantages over the run-flat tire of (1) and the process of (2), in which the problem of weight increase as in the run-flat tire of (1) is settled, and the process of (3) is capable of self-sealing without having a person inject the liquid upon puncture.

An example of the process of (3), which has advantages over the run-flat tire of (1) and the process of (2), is proposed in Japanese Patent Laid-Open Publication No. 53-55802, in which a rubber composition having a peroxide added to polyisobutylene is disposed on the inner surface of the tire and heated to be decomposed upon tire vulcanization to obtain a tacky sealant.

Nevertheless, in the technique described in the publication, polyisobutylene is decomposed further, and liquid-like polybutene itself compounded as an adhesive is decomposed by a peroxide in a tacky sealant obtained by heating and decomposing polyisobutylene with a peroxide. Thus, the viscosity of the sealant is extremely reduced. Accordingly, when the sealant is disposed on the inner surface of the tire, the stickiness to a nail pierced the sealant becomes poor as the viscosity is reduced. Therefore, there has been a problem that the sealing properties are aggravated.

US 4,539,344 discloses a butyl rubber-based tacky sealant composition for pneumatic tires. The composition is characterized by certain tensile strength, elongation and crosslink density.

EP 0 007 982 A1 discloses a self-sealing pneumatic tire comprising a self-sealing layer. This layer comprises a blend of a cross-linked polymeric material and an irradiation degraded polymeric material. In an alternative embodiment, the cross-linking polymeric material is cross-linked by vulcanization.

### DISCLOSURE OF THE INVENTION

An object of the present invention is to provide a tire according to claim 1 and a process for producing the same according to claim 3.

The rubber composition for a puncture-preventive sealant to form the spongy sealant layer having moderate viscosity properties comprises 0.2 to 20 parts by weight of a peroxide per 100 parts by weight of polymers comprising 95 to 50 parts by weight of a polymer decomposable with the peroxide and 5 to 50 parts by weight of a polymer crosslinkable with the peroxide.

The pneumatic tire with excellent puncture-preventive function has in the tire main body a tacky sealant layer obtained by heating a rubber composition, which comprises 0.2 to 20 parts by weight of a peroxide per 100 parts by weight of polymers comprising 95 to 50 parts by weight of a polymer decomposable with the peroxide and 5 to 50 parts by weight of a polymer crosslinkable with the peroxide.

Moreover, this pneumatic tire of the present invention is efficiently produced by heating a rubber composition and vulcanizing other members of the tire at the same time when a tacky sealant layer is formed in the tire main body by heating the rubber composition, which comprises 0.2 to 20 parts by weight of a peroxide per 100 parts by weight of polymers comprising 95 to 50 parts by weight of a polymer decomposable with the peroxide and 5 to 50 parts by weight of a polymer crosslinkable with the peroxide.

### BRIEF DESCRIPTION OF THE DRAWINGS

Fig. 1 is a meridian half sectional view of a pneumatic tire of the present invention.
Fig. 2 is an explanatory view showing a state where a nail pierces the pneumatic tire in Fig. 1.

### BEST MODES FOR CARRYING OUT THE INVENTION

Hereinafter, the present invention is detailed further. The present invention is characterized in that a polymer decomposable with a peroxide and a polymer crosslinkable with a peroxide are used together in a specific range. Specifically, when the rubber composition is heated under the existence of a peroxide, the polymer decomposable with a peroxide is decomposed at the same time as that the polymer crosslinkable with a peroxide is crosslinked. In addition, as the polymer decomposable with a peroxide is decomposed, low molecular-weight olefin gas is generated. Thus, the crosslinkable polymer becomes a lattice, and the rubber composition becomes spongy. Meanwhile, the sponge has moderate viscosity properties by decomposing the polymer decomposable with a peroxide. As a result, the obtained spongy tacky sealant can give excellent puncture-preventive function to the tire. Further, it is possible to lighten the tire itself.

In the present invention, the polymer decomposable with a peroxide exhibits rubber-like viscosity by being heated under the existence of the peroxide. Examples of the polymer include polyisobutylene and polypropylene. Among those, polyisobutylene is preferred. Herein, polyisobutylene includes a polymer which is copolymerized with a small amount of isoprene or the like. In the case of polymerization, polyisobutylene with not more than 2.2 mol % of insaturation is normally used.

Next, the polymer crosslinkable with a peroxide of the present invention indicates a polymer which is crosslinked when it is heated with a peroxide added. Examples of the polymer include natural rubber, styrene-butadiene rubber (SBR), butadiene rubber (BR), nitrile butadiene rubber (NBR) and ethylene-propylene-diene terpolymer (EPDM).

In addition, it is necessary to compound 0.2 to 20 parts by weight of a peroxide in the rubber composition per 100 parts by weight of the polymers decomposable and crosslinkable with the peroxide. When the amount is less than 0.2 parts by weight, the polymer decomposable with a peroxide, such as polyisobutylene, is not sufficiently decomposed. Moreover, the crosslinking of the polymer crosslinkable with a peroxide does not sufficiently develop. Thus, the puncture-preventive effects cannot sufficiently be exerted. When the amount exceeds 20 parts by weight, the added amount is extremely large. Accordingly, the decomposition develops excessively, and the viscosity of a tacky composition becomes extremely low. Therefore, the puncture-preventive effects cannot be obtained sufficiently.

Examples of the peroxide include acyl peroxides such as benzoyl peroxide and P-chlorobenzoyl peroxide, ketone peroxides such as methylethylketone peroxide, peroxyesters such as t-butylperoxyacetate, t-butylperoxybenzoate and t-butylperoxyphthalate, and alkyl peroxides such as dicumyl peroxide, di-t-butylperoxybenzoate, 1,3-bis (t-butylperoxy isopropyl) benzene, and hydroperoxides such as t-butylhydroperoxide. **Especially, dicumyl peroxide is preferred.**

To the rubber composition used for the creation of the tacky sealant in the present invention, a catalyst such as cobalt naphthenate which accelerates the decomposition of a polymer by a peroxide, an inorganic filler such as carbon black and silica, an adhesive such as polybutene, or a plasticizer such as aromatic series process oil, naphthene series process oil and paraffin series process oil may be added as necessary. However, clay is not preferred because the clay hinders the decomposition of the peroxide.

Moreover, the thickness of the tacky sealant layer preferably ranges from 1 to 8 mm, and more preferably from 1 to 4 mm. It is not preferable that the tacky sealant layer be thinner than 1 mm because the puncture-preventive effects will be reduced or thicker than 8 mm because the tire weight will increase.

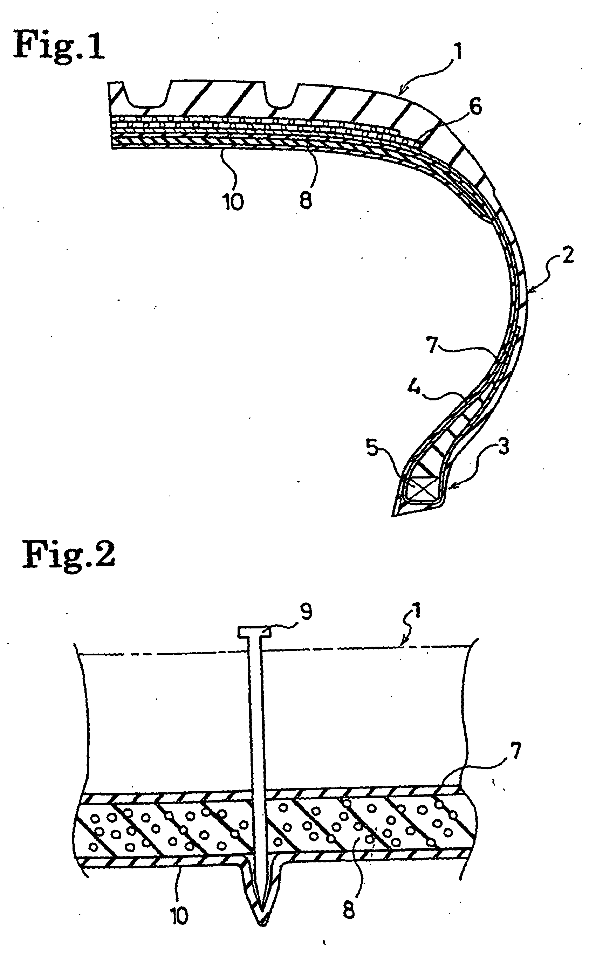

Hereinafter, the constitution of a tire of the present invention is detailed with reference to the drawings. Fig. 1 is a meridian half sectional view showing an example of a pneumatic tire of the present invention. Reference numerals 1, 2 and 3 denote a tread, a sidewall and a bead, respectively. A carcass layer 4 is disposed in the inner side of the tire, and both ends of the carcass layer 4 are connected to a bilateral pair of bead cores 5, 5. Belt layers 6 are provided on the periphery of the carcass layer 4 in the tread 1. An inner liner 7 is disposed in the inner side of the carcass layer 4. A spongy tacky sealant layer 8 is disposed in the inner side of the inner liner 7 at a position corresponding to the tread. A cover sheet rubber layer 10 is disposed in the inner side of the tacky sealant layer 8.

Butyl rubber, which is excellent in the impermeability, is generally used for the inner liner 7. Alternatively, a thermoplastic resin film may be used. The cover sheet rubber layer 10 is effective for maintaining a uniform tacky sealant layer over the entire inner surface of the tire. The thickness of the cover sheet rubber layer 10 preferably ranges from 0.5 to 2.0 mm. The cover sheet rubber layer 10 is formed by natural rubber, BR, SBR or the like.

The process for producing the pneumatic tire thus structured includes a step of disposing a rubber composition to the inner surface of an unvulcanized tire in the process for producing a normal pneumatic tire. The rubber composition has 0.2 to 20 parts by weight of a peroxide per 100 parts by weight of polymers comprising 95 to 50 parts by weight of a polymer decomposable with the peroxide and 5 to 50 parts by weight of a polymer crosslinkable with the peroxide. By heating the rubber composition and vulcanizing other members at the same time, the rubber composition forms a spongy tacky sealant layer having moderate viscosity in the tire main body through thermal decomposition and crosslinkable reaction. At this time, the provision of the cover sheet rubber layer on the inner surface of the sealant layer is effective for maintaining a uniform tacky sealant layer over the entire inner surface of the tire.

In the process for producing a normal pneumatic tire, vulcanization is performed while a bladder is inserted into the inner side of the tire as pressurizing means. However, in the present invention, it is preferable to maintain the bladder at a position contracted by an increase in the thickness of the tacky sealant layer as to increase the thickness of the tacky sealant layer to a predetermined thickness upon the termination of the vulcanization. Thus, it is possible to control the thickness of the tacky sealant to be uniform.

In other words, since the foregoing tacky sealant layer foams by the generation of gas accompanying the decomposition of the polymers upon the termination of the vulcanization, there is a possibility that the thickness of the tacky sealant layer becomes uneven if the bladder is contracted rapidly. Thereupon, by maintaining the bladder in a state where the bladder is slightly contracted in a radial direction by decompression, the tacky sealant layer is foamed to have uniform thickness. For example, when the initial thickness of the tacky sealant layer is t₁ (mm) and the target thickness is t₂ (mm), a radius R of the bladder should be contracted by an increase in the thickness of the tacky sealant layer (t₂ - t₁). When the bladder is maintained at the slightly contracted position, the maintenance time should be set to 10 to 120 seconds.

By the pneumatic tire having the tacky sealant layer of the present invention, the puncture-less effects can be obtained as follows: as shown in Fig. 2, a nail 9 pierces the tire from the tread 1 to the tacky sealant layer 8 in the inner side of the tire through the inner liner 7. In this case, the cover sheet rubber layer 10 changes its shape into a triangle, and the tacky sealant layer 8 on the inner surface sticks to the nail 9 as to hermetically seal the puncture. Thus, the leakage of air is prevented. Moreover, when the nail 9 comes off by centrifugal force caused by high-speed driving, the tacky sealant layer 8 stuck to the periphery of the nail 9 is drawn to the puncture of the tread 1 to seal. Therefore, air will not leak.

### Example

Hereinafter, the present invention is detailed by giving examples. Note that viscosity in Examples and Comparison Examples were evaluated by the following measurement method.

An iron rod (14Φ = 154 mm²) made of SS400 (the same material used for the nail) was gently touched on the tacky surface at the surface pressure of 1 g/mm², and separation power was measured after one minute. In the present invention, when the separation power was not less than 40 kPa, the, viscosity was determined to satisfy the application level.

### Example 1

A pneumatic tire provided with a tacky sealant layer, in which the tire size thereof is 205/65R15, the thickness of the tacky sealant layer is 3 mm, and the thickness of the cover sheet rubber layer is 1 mm, was produced through vulcanization for 20 minutes at 160°C by use of a sealant rubber composition formed by the following components.

| Material Compounded With Rubber Composition | Parts by Weight |
|---|---|
| Polyisobutylene | 95 |
| Natural Rubber | 5 |
| FEF (Carbon Black) | 30 |
| Aromatic Oil | 10 |
| Peroxide (Dicumyl Peroxide) | 15 |

The sponge formation state of the tacky sealant layer of the obtained tire was visually evaluated. The viscosity was measured and evaluated by the aforementioned method. The results are listed in Table 1. As for the sponge formation in Table 1, number 1 indicates the case where a good-quality sponge was formed. Number 2 indicates the case where a sponge was formed. Number 3 indicates the case where a sponge hardly existed.

### Example 2

Except for setting the compounding amount of polyisobutylene to 65 parts by weight and the compounding amount of natural rubber, the crosslinkable polymer, to 35 parts by weight, unlike in Example 1, the tacky layer was formed in the same way as in Example 1. The results are listed in Table 1.

### Comparison Example 1

Except for setting the compounding amount of polyisobutylene to 98 parts by weight and the compounding amount of natural rubber, the crosslinkable polymer, to 2 parts by weight, unlike in Example 1, the tacky layer was formed in the same way as in Example 1. The results are listed in Table 1.

### Comparison Example 2

Except for setting the compounding amount of polyisobutylene to 45 parts by weight and the compounding amount of natural rubber, the crosslinkable polymer, to 55 parts by weight, unlike in Example 1, the tacky layer was formed in the same way as in Example 1. The results are listed in Table 1.

### Example 3

Unlike in Example 1, 50 parts by weight of polypropylene was used instead of polyisobutylene, which is a polymer decomposable with a peroxide. Instead of natural rubber, which is a crosslinkable polymer, 50 parts by weight of EPDM was used. Other than those, the tacky sealant layer was formed in the same way as in Example 1. The results are listed in Table 1.

**Table 1**

| | Decomposable Polymer | Crosslinkable Polymer | Sponge Formation | Viscosity |
|---|---|---|---|---|
| Example 1 | 95 Parts by Weight of Polyisobutylene | 5 Parts by Weight of Natural Rubber | 2 | 65 kPa |
| Example 2 | 65 Parts by Weight of Polyisobutylene | 35 Parts by Weight of Natural Rubber | 1 | 51 kPa |
| Comparison Example 1 | 98 Parts by Weight of Polyisobutylene | 2 Parts by Weight of Natural Rubber | 3 | 75 kPa |
| Comparison Example 2 | 45 Parts by Weight of Polyisobutylene | 55 Parts by Weight of Natural Rubber | 1 | 12 kPa |
| Example 3 | 50 Parts by Weight of Polypropylene | 50 Parts by Weight of EPDM | 1 | 68 kPa |

Hereinbefore, the preferred embodiment of the present invention has been detailed. However, it should be understood that various changes, substitutions and replacements can be made therein without departing from spirit and scope of the inventions as defined by the appended claims.

### INDUSTRIAL APPLICABILITY

In the present invention, by using a polymer decomposable with a peroxide and a polymer crosslinkable with a peroxide together at a specific ratio, a spongy tacky sealant having moderate viscosity can be formed through thermal process under the existence of the peroxide. Thus, it is possible to give excellent puncture-preventive function to a tire and lighten the tire itself.

## Claims

1. A pneumatic tire having in a tire main body a tacky sealant layer (8) obtainable by heating a rubber composition for a puncture-preventive sealant comprising 0.2 to 20 parts by weight of a peroxide per 100 parts by weight of polymers comprising 95 to 50 parts by weight of a polymer decomposable with the peroxide and 5 to 50 parts by weight of a polymer crosslinkable with the peroxide, such that said composition foams by the generation of gas accompanying the decomposition of said decomposable polymer upon exposure to heat.

2. The pneumatic tire according to claim 1, wherein the tacky sealant layer (8) is disposed at a farther inside of an inner liner layer (7) of the tire, and a cover sheet rubber layer (10) is provided on an inner surface of the tacky sealant layer (8).

3. A process for producing a pneumatic tire, wherein, when a tacky sealant layer (8) is formed in a tire main body by heating a rubber composition comprising 0.2 to 20 parts by weight of a peroxide per 100 parts by weight of polymers comprising 95 to 50 parts by weight of a polymer decomposable with the peroxide and 5 to 50 parts by weight of a polymer crosslinkable with the peroxide, the rubber composition is heated at the same time as that other members of the tire are vulcanised and wherein said tacky sealant layer foams by the generation of gas accompanying the decomposition of the decomposable polymer upon vulcanisation.

4. The process for producing a pneumatic tire according to claim 3, wherein, in the process for producing a pneumatic tire in which vulcanization is performed while a bladder is inserted into an inner side of the tire as pressurizing means, upon the termination of the vulcanization, the bladder is maintained at a position contracted by an increase in thickness of the tacky sealant layer as to increase the thickness of the tacky sealant layer to a predetermined thickness.

## Patentansprüche

1. Luftreifen (1) mit einer klebrigen Dichtungsmaterialschicht (8) in einem Reifenhauptkörper, die erhältlich ist durch Erwärmen einer Kautschukzusammensetzung für ein Dichtungsmaterial zur Verhinderung eines Reifenschadens, die 0,2 bis 20 Gew.Teile eines Peroxids pro 100 Gew.Teile von Polymeren, die 95 bis 50 Gew.Teile eines Polymers, das mit dem Peroxid zersetzbar ist, und 5 bis 50 Gew.Teile eines Polymers, das mit dem Peroxid vernetzbar ist, umfassen, so daß die Zusammensetzung durch die Erzeugung von Gas, das die Zersetzung des zersetzbaren Polymers beim Aussetzen an Wärme begleitet, aufschäumt, umfaßt.

2. Luftreifen (1) gemäß Anspruch 1, in dem die klebrige Dichtungsmaterialschicht (8) an einer weiter entfernten Innenseite einer Innenlinerschicht (7) des Reifens angeordnet ist und eine Decksheet-Kautschukschicht (10) an einer inneren Oberfläche der klebrigen Dichtungsmaterialschicht (8) vorgesehen ist.

3. Verfahren zur Herstellung eines Luftreifens (1), in dem, wenn eine klebrige Dichtungsmaterialschicht (8) in einem Reifenhauptkörper durch Erwärmen einer Kautschukzusammensetzung, umfassend 0,2 bis 20 Gew.Teile eines Peroxids pro 100 Gew.Teile von Polymeren, die 95 bis 50 Gew.Teile eines Polymers, das mit dem Peroxid zersetzbar ist, und 5 bis 50 Gew.Teile eines Polymers, das mit dem Peroxid vernetzbar ist, umfassen, gebildet wird, die Kautschukzusammensetzung zur gleichen Zeit erwärmt wird, wie die anderen Teile des Reifens vulkanisiert werden, und wobei die klebrige Dichtungsmaterialschicht durch Erzeugung von Gas, das die Zersetzung des zersetzbaren Polymers bei der Vulkanisation begleitet, aufschäumt.

4. Verfahren zur Herstellung eines Luftreifens (1) gemäß Anspruch 3, wobei in dem Verfahren zur Herstellung eines Luftreifens, in dem die Vulkanisation durchgeführt wird, während eine Blase als ein Mittel zum Unterdrucksetzen in die Innenseite des Reifens eingesetzt wird, bei der Beendigung der Vulkanisierung die Blase in einer Position gehalten wird, die kontrahiert ist durch eine Vergrößerung der Dicke der klebrigen Dichtungsmaterialschicht, um so die Dicke der klebrigen Dichtungsmaterialschicht bis zu einer vorgegebenen Dicke zu erhöhen.

## Revendications

1. Pneumatique ayant dans un corps principal de pneumatique une couche étanche collante (8) pouvant être obtenue en chauffant une composition de caoutchouc pour une couche étanche de prévention de la crevaison comprenant 0,2 à 20 parties en poids d'un peroxyde pour 100 parties en poids des polymères comprenant 95 à 50 parties en poids d'un polymère décomposable par le peroxyde et 5 à 50 parties en poids d'un polymère réticulable par le peroxyde, de façon que ladite composition mousse par la production de gaz accompagnant la décomposition dudit polymère décomposable lors d'une exposition à de la chaleur.

2. Pneumatique selon la revendication 1, où la couche étanche collante (8) est disposée le plus loin à l'intérieur d'une couche de chemise interne (7) du pneumatique, et une couche de caoutchouc de feuille de recouvrement (10) est prévue sur une surface interne de la couche étanche collante.

3. Procédé de production d'un pneumatique, où, quand une couche étanche collante (8) est formée dans un corps principal de pneumatique en chauffant une composition de caoutchouc comprenant 0,2 à 20 parties en poids d'un peroxyde pour 100 parties en poids de polymère comprenant 95 à 50 parties en poids d'un polymère décomposable par le peroxyde et 5 à 50 parties en poids d'un polymère réticulable par le peroxyde, la composition de caoutchouc est chauffée en même temps que d'autres éléments du pneumatique sont vulcanisés, et où ladite couche étanche collante mousse par la production des gaz accompagnant la décomposition du polymère décomposable lors de la vulcanisation.

4. Procédé de production d'un pneumatique selon la revendication 3, où, dans le procédé de production d'un pneumatique dans lequel la vulcanisation est accomplie alors qu'une vessie est insérée dans un côté interne du pneumatique en tant que moyen de mise sous pression, à la fin de la vulcanisation, la vessie est maintenue en une position contractée par une augmentation de l'épaisseur de la couche étanche collante afin d'augmenter l'épaisseur de la couche étanche collante à une épaisseur prédéterminée.
